# EUROPEAN PATENT APPLICATION

(11) **EP 2 540 377 A1**
(43) Date of publication of application: **02.01.2013**
(21) Application number: 11171977.9
(22) Date of filing: 29.06.2011
(51) Int. Cl.: B01D 53/26, C01B 31/20, F23L 7/00

(54) **A method of cleaning a carbon dioxide rich flue gas**

(71) Applicant: Alstom Technology Ltd, 5400 Baden (CH)
(72) Inventor: Grubbström, Jörgen, Per-Olof, 352 55 VÄXJÖ (SE)
(74) Representative: Kånge, Lars Rikard

(57) **Abstract**

A method and a gas purification system for cleaning a carbon dioxide rich flue gas generated in a boiler (2) combusting a fuel in the presence of a gas containing oxygen gas, the method comprising: removing at least a portion of the water content of the flue gas in a flue gas condenser (36); compressing the carbon dioxide rich flue gas in a compressor arranged downstream of the flue gas condenser (36), as seen in the flow direction of the flue gas; removing at least a portion of the remaining water content of the flue gas using molecular sieves in a gas drier arranged downstream of the compressor; regenerating the molecular sieves by withdrawing a portion of the carbon dioxide rich flue gas downstream of the flue gas condenser (36), but upstream of the compressor, heating the withdrawn flue gas to a temperature suitable for regeneration of the molecular sieves, passing the heated flue gas through the gas drier to desorb water and NOₓ from the molecular sieves; and returning the carbon dioxide rich flue gas containing the desorbed water and NOₓ to the boiler (2).

## Description

### Field of the Invention

The present invention relates to a method of cleaning a carbon dioxide rich gas generated in a boiler combusting a fuel in the presence of a gas containing oxygen gas.

The present invention further relates to a gas purification system for cleaning a carbon dioxide rich gas generated in a boiler system comprising a boiler for combusting a fuel in the presence of a gas containing oxygen gas.

### Background of the Invention

In the combustion of a fuel, such as coal, oil, peat, waste, etc., in a combustion plant, such as a power plant, a hot process gas is generated, such process gas containing, among other components, carbon dioxide CO₂. With increasing environmental demands various processes for removing carbon dioxide from the process gas have been developed. One such process is the so called oxy-fuel process. In an oxy-fuel process a fuel, such as one of the fuels mentioned above, is combusted in the presence of a nitrogen-lean gas. Oxygen gas, which is provided by an oxygen source, is supplied to a boiler in which the oxygen gas oxidizes the fuel. In the oxy-fuel combustion process a carbon dioxide rich flue gas is produced, which can be disposed of in order to reduce the emission of carbon dioxide into the atmosphere.

CO₂ capture often comprises compression and cooling of the flue gas to separate CO₂ in liquid or solid form from non-condensable flue gas components, such as N₂ and O₂.

Prior to CO₂ capture, it is generally necessary to clean the carbon dioxide rich flue gas. Gas cleaning operation may generally include removal of dust, sulfur compounds, metals, nitrogen oxides (NOₓ), etc.

Current systems and methods for reduction of NOₓ emissions, e.g. selective catalytic reduction (SCR), rely on the use of chemical agents, e.g. ammonia for reduction of NOₓ to N₂.

### Summary of the Invention

In oxy-fuel combustion oxygen is used instead of air. The purpose is to produce a CO₂ rich flue gas which may be compressed and purified in a gas processing unit (GPU) before transportation and storage. The low content of nitrogen in the gas supplied to the combustion process will generate a flue gas with a relatively low content of NOₓ. However, because NOₓ in the form of NO₂ may adsorb to the molecular sieves in the GPU, high concentrations of NO₂ may be present in the exit gas during regeneration of the molecular sieves.

An object of the present invention is to provide a method of cleaning a carbon dioxide rich flue gas generated in a boiler combusting a fuel in the presence of a gas containing oxygen gas, the method resulting in reduced emissions of NOₓ to the atmosphere as compared to the prior art methods.

According to aspects illustrated herein, there is provided a method of cleaning a carbon dioxide rich flue gas generated in a boiler combusting a fuel in the presence of a gas containing oxygen gas, the method comprising:
removing at least a portion of the water content of the flue gas in a flue gas condenser;
compressing the carbon dioxide rich flue gas in a compressor arranged downstream of the flue gas condenser, as seen in the flow direction of the flue gas;
removing at least a portion of the remaining water content of the flue gas using molecular sieves in a gas drier arranged downstream of the compressor;
regenerating the molecular sieves by withdrawing a portion of the carbon dioxide rich flue gas downstream of the flue gas condenser, but

upstream of the compressor, heating the withdrawn flue gas to a temperature suitable for regeneration of the molecular sieves, passing the heated flue gas through the gas drier to desorb water and NOₓ from the molecular sieves; and
returning the carbon dioxide rich flue gas containing the desorbed water and NOₓ to the boiler.
Returning the carbon dioxide rich flue gas containing the desorbed water and NOₓ to the boiler, in accordance with the embodiments described herein, allows destruction of NOₓ in the high temperature combustion zone of the boiler without any consumption of chemical reagent and without generating any additional waste stream. This may help to eliminate the need for supplementary NOₓ removal steps, such as selective catalytic reduction, thereby reducing the overall capital and operating costs of the boiler system.

An advantage of the method is that no chemical reaction agent or catalyst is required and that no additional waste products are formed. Furthermore, the method can be performed in existing gas purification systems for cleaning a carbon dioxide rich flue gas generated in a boiler combusting a fuel in the presence of a gas containing oxygen gas with only minor structural modifications. No additional vessels or reactors are required.

According to an embodiment, the temperature to which the withdrawn flue gas is heated is the range of 130 °C to 315 °C.

According to an embodiment, the temperature to which the withdrawn flue gas is heated is the range of 200 °C to 290 °C.

Using a portion of the carbon dioxide rich flue gas downstream of the flue gas condenser for regeneration of the gas drier is advantageous since this flue gas has been at least partially cleaned. Dust removal and sulfur removal steps generally present upstream of the flue gas condenser significantly reduce the problems with clogging or fouling of the molecular sieves by incoming soot, fly ashes and other particulate materials, such as metals, thus increasing the life span of the molecular sieves. In addition to reducing the water content of the flue gas, an additional advantage of the flue gas condenser is that wash liquid or slurry, e.g. lime slurry, entrained in the flue gas from a preceding sulfur dioxide removal step is removed during the condensation, thus further reducing the problems of fouling and/or clogging of the gas drier.

According to an embodiment, the method further comprises subjecting the flue gas stream to dust removal upstream of the flue gas condenser, as seen in the flow direction of the flue gas.

According to an embodiment, the method further comprises subjecting the flue gas stream to sulfur dioxide removal upstream of the flue gas condenser, as seen in the flow direction of the flue gas.

According to other aspects illustrated herein, there is provided a gas purification system for cleaning a carbon dioxide rich flue gas stream generated in a boiler combusting a fuel in the presence of a gas containing oxygen gas, the gas purification system comprising:
a flue gas condenser operative for removing at least a portion of the water content of the flue gas;
a compressor arranged downstream of the flue gas condenser as seen in the flow direction of the carbon dioxide rich flue gas, for compressing the carbon dioxide rich flue gas;
a gas drier containing molecular sieves, arranged downstream of the compressor as seen in the flow direction of the carbon dioxide rich flue gas, for removing at least a portion of the remaining water content of the flue gas; and
a gas drier regeneration system for desorbing water and NOₓ from the molecular sieves;
said gas drier regeneration system comprising a gas conduit for withdrawing a portion of the carbon dioxide rich flue gas stream downstream of the flue gas condenser but upstream of the compressor and directing said portion of the carbon dioxide rich flue gas stream through the gas drier and back to the boiler, and a flue gas heater operative for heating the withdrawn portion of carbon dioxide rich flue gas to a temperature suitable for regeneration of the molecular sieves before it enters the gas drier.

According to an embodiment, the temperature to which the withdrawn flue gas is heated is the range of 130 °C to 315 °C.

According to an embodiment, the temperature to which the withdrawn flue gas is heated is the range of 200 °C to 290 °C.

According to an embodiment, the system further comprises a dust removal filter arranged upstream of the flue gas condenser, as seen in the flow direction of the flue gas.

According to an embodiment, the system further comprises a scrubber for sulfur dioxide removal upstream of the flue gas condenser, as seen in the flow direction of the flue gas.

The above described and other features are exemplified by the following figures and detailed description. Further objects and features of the present invention will be apparent from the description and the claims.

### Brief description of the Drawings

Referring now to the figures, which are exemplary embodiments, and wherein the like elements are numbered alike:
Figure 1 schematically depicts an embodiment of a boiler system.
Figure 2 schematically depicts an embodiment of a gas drier.
Figure 3 schematically depicts an embodiment of a GPU.

### Description of Preferred Embodiments

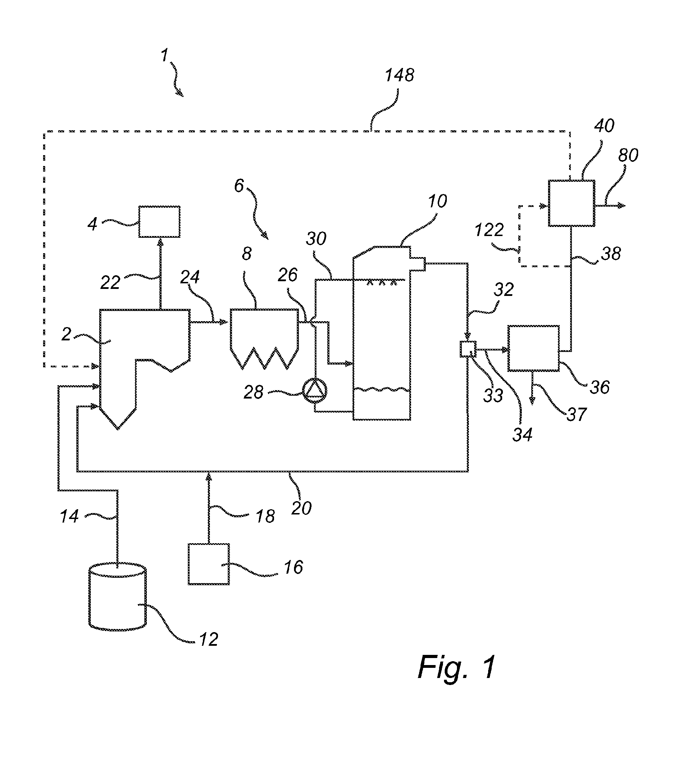

Fig. 1 is a schematic representation of a boiler system 1, as seen from the side thereof. The boiler system 1 comprises, as main components, a boiler 2, being in this embodiment an oxy-fuel boiler, a steam turbine electric power generation system, schematically indicated as 4, and a gas cleaning system 6. The gas cleaning system 6 comprises a particulate removal device, which may, for example, be a fabric filter or an electrostatic precipitator 8, and a sulphur dioxide removal system, which may be a wet scrubber 10.

A fuel, for example coal, oil, or peat, is contained in a fuel storage 12, and can be supplied to the boiler 2 via a supply pipe 14. The fuel may for example be transported to the boiler by means of a recirculated portion of the flue gas stream coming from the flue gas condenser 36, which will be described further below. An oxygen gas source 16 is operative for providing oxygen gas in a manner which is known per se. The oxygen gas source 16 may be an air separation plant operative for separating oxygen gas from air, an oxygen separating membrane, a storage tank, or any other source for providing oxygen gas to the boiler system 1. A supply duct 18 is operative for forwarding the produced oxygen gas, comprising typically 90-99.9 vol.% oxygen, O₂, to the boiler 2. A duct 20 is operative for forwarding recirculated flue gas, which contains carbon dioxide, to the boiler 2. As indicated in Fig. 1, the supply duct 18 joins the duct 20 upstream of the boiler 2, such that oxygen gas and recirculated flue gas, which contains carbon dioxide, may become mixed with each other to form a gas mixture containing typically about 20-50 % by volume of oxygen gas, the balance being mainly carbon dioxide and water vapour, upstream of the boiler 2. Since almost no air enters the boiler 2 there is almost no nitrogen gas supplied to the boiler 2. In practical operation, less than 3 % by volume of the gas volume supplied to the boiler 2 is air, which mainly enters the boiler system 1 as a leakage of air via, for example, the boiler 2 and the gas cleaning system 6. The boiler 2 is operative for combusting the fuel, that is to be supplied via the supply pipe 14, in the presence of the oxygen gas, mixed with the recirculated flue gas, which contains carbon dioxide, that is to be supplied via the duct 20. The combustion occurs in a portion of the boiler referred to herein as the combustion zone. A steam pipe 22 is operative for forwarding steam, that will be produced in the boiler 2 as a result of the combustion, to the steam turbine electric power generation system 4, which is operative for generating power in the form of electric power.

A duct 24 is operative for forwarding carbon dioxide rich flue gas generated in the boiler 2 to the dust removal device 8. By "carbon dioxide rich flue gas" is meant that the flue gas leaving the boiler 2 via the duct 24 will contain at least 40 % by volume of carbon dioxide, CO₂. Often more than 50% by volume of the flue gas leaving the boiler 2 will be carbon dioxide. Typically, the flue gas leaving boiler 2 will contain 50-80 % by volume of carbon dioxide. The balance of the "carbon dioxide rich flue gas" will be about 15-40% by volume of water vapour (H₂O), 2-7 % by volume of oxygen (O₂), since a slight oxygen excess is often preferred in the boiler 2, and totally about 0-10 % by volume of other gases, including mainly nitrogen (N₂) and argon (Ar), since some leakage of air can seldom be completely avoided.

The carbon dioxide rich flue gas generated in the boiler 2 may typically comprise contaminants in the form of, for example, dust particles, hydrochloric acid, HCl, sulphur oxides, SOₓ, and heavy metals, including mercury, Hg, that should be removed, at least partly, from the carbon dioxide rich flue gas prior to disposing of the carbon dioxide.

The dust removal device 8 removes most of the dust particles from the carbon dioxide rich flue gas. A duct 26 is operative for forwarding the carbon dioxide rich flue gas from the fabric filter 8 to the wet scrubber 10 of the gas cleaning system 6. The wet scrubber 10 comprises a circulation pump 28 which is operative for circulating, in a slurry circulation pipe 30, an absorption liquid, comprising for example lime stone, from the bottom of the wet scrubber 10 to a set of nozzles arranged in the upper portion of the wet scrubber 10. The slurry nozzles are operative for finely distributing the absorption liquid in the wet scrubber 10 to achieve good contact between the absorption liquid and the flue gas being forwarded to the wet scrubber 10 via the duct 26 and flowing substantially vertically upwards inside the wet scrubber 10 to effect efficient removal of sulphur dioxide, SO₂, and other acid gases from the carbon dioxide rich flue gas.

An at least partly cleaned carbon dioxide rich flue gas leaves the wet scrubber 10 via a duct 32 which forwards the flue gas to a gas splitting point 33, where the at least partly cleaned carbon dioxide rich flue gas is divided into two flows, namely a first flow, which via the duct 20 is recirculated back to the boiler 2, and a second flow, which via a duct 34 is forwarded to a flue gas condenser 36. The first flow, which is recirculated back to the boiler 2 via duct 20, typically comprises 50 - 75% by volume of the total flow of the partly cleaned carbon dioxide rich flue gas leaving the wet scrubber 10. The second flow, typically comprising 25 - 50% by volume of the total flow of the partly cleaned carbon dioxide rich flue gas leaving the wet scrubber 10, is, hence, forwarded, via the duct 34, to the flue gas condenser 36.

In the flue gas condenser 36, the flue gas is cooled below its water dew point and the heat released by the resulting condensation is recovered as low temperature heat. The water content of the flue gas may for example be reduced from about 40 % by volume in the flue gas fed to the flue gas condenser to about 5 % by volume in the flue gas leaving the flue gas condenser. Depending on pH and temperature in the flue gas condenser, the flue gas condensation may also lead to a reduction of sulfur oxides, SOₓ, in the flue gas. The sulfur oxides are captured in the formed condensate and separated from the flue gas. Furthermore, wash liquid or slurry, e.g. lime slurry, entrained in the flue gas from the preceding sulfur dioxide removal step is removed during the condensation, thus reducing the problems of fouling and/or clogging of the gas drier and/or gas heater surfaces. The flue gas condenser 36 is provided with a circulation pump which is operative for circulating a cooling liquid, via a circulation pipe, in the flue gas condenser 36 in a manner which will be described in more detail hereinafter. The cooling liquid being circulated in the flue gas condenser 36 cools the partly cleaned carbon dioxide rich flue gas to a temperature which is below its saturation temperature, with respect to water vapor, and, hence, causes a condensation of at least a portion of the water vapor content of the partly cleaned carbon dioxide rich flue gas being forwarded from the wet scrubber 10. The condensed water leaves the flue gas condenser 36 via a disposal pipe 37. A portion of the condensed water leaving the flue gas condenser 36 via the pipe 37 can be forwarded to the wet scrubber 10 as make up water. A further portion of the condensed water can be forwarded to a water treatment unit, in which the condensed water is treated prior to being reused in the process, for example as boiler water, or being disposed of. The cleaned carbon dioxide rich flue gas leaves the flue gas condenser 36 via a duct 38 and is forwarded to the GPU 40.

In the gas compression and purification unit (GPU) 40, the partially cleaned carbon dioxide rich flue gas coming from the flue gas condenser 36 is further cleaned and is compressed for disposal. Compressed carbon dioxide hence leaves the GPU 40 via a duct 80 and is transported away for disposal, which is sometimes referred to as "CO₂ sequestration". The GPU 40 comprises, among other components, at least one compressor 41 operative for compressing cleaned carbon dioxide rich flue gas coming from the FGC 36, and at least one gas drier 70. The gas drier 70 serves to remove at least a portion of the remaining content of water vapour of the compressed gas. Also, at least a portion of the NOₓ content of the compressed gas may be adsorbed in the gas drier.

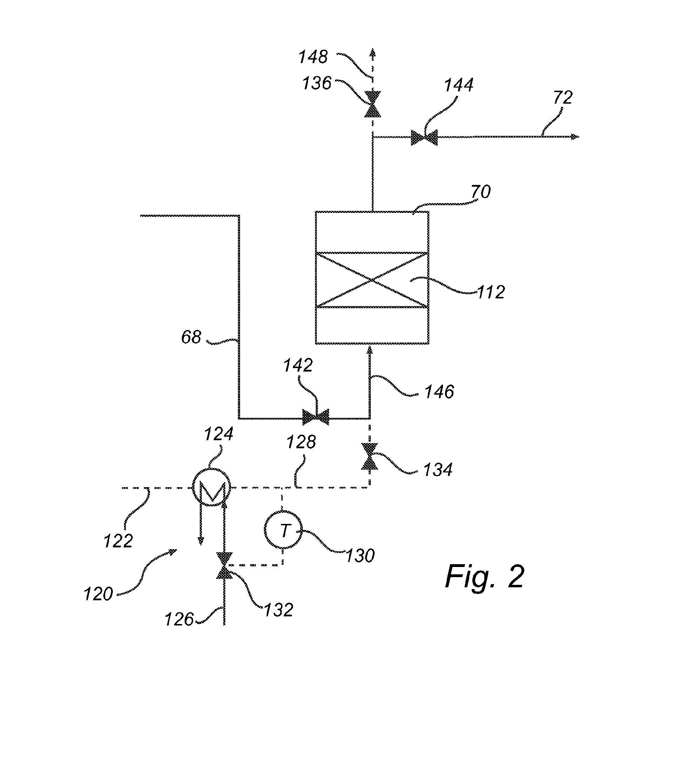

Fig. 2 illustrates an embodiment of the gas drier 70. The gas drier 70 is arranged downstream of the compressor 41, as seen in the flow direction of the flue gas. The compressed carbon dioxide rich flue gas is forwarded from the compressor 41, optionally via a mercury adsorber (not shown in Fig. 2) to the gas drier 70 via the fluidly connected duct 68. The gas drier 70 is provided with a packing 112 comprising a molecular sieve, having affinity for water vapour. The molecular sieve may, for example consist of aluminosilicate minerals, clays, porous glasses, microporous charcoals, zeolites, active carbons, or synthetic compounds that have open structures through which small molecules, such as water vapour can diffuse and be adsorbed, or combinations thereof. In an embodiment, the molecular sieve comprises a hydrated aluminosilicate. The molecular sieve may for example be a 3A or 4A molecular sieve.

Hence, as the compressed carbon dioxide rich flue gas passes through the packing 112, at least a portion of the content of water vapour of the gas will be adsorbed on the molecular sieve of the packing 112.

In one example, the compressed carbon dioxide rich flue gas leaving the gas drier 70 via the duct 72 has a temperature of 30 °C, and an absolute pressure of just below 30 bar absolute pressure. The gas also has a reduced content of water vapour. Such a gas is suitable for further treatment in a CO₂ liquefaction unit and high pressure compression unit, and for eventually being sent to carbon dioxide sequestration.

The gas drier 70 is provided with a regeneration system 120 for intermittent regeneration of the water vapour adsorption capacity of the gas drier 70. A supply duct 122 is arranged for supplying a regeneration gas to the system 120. The regeneration system uses a portion of the carbon dioxide rich flue gas stream as regeneration gas. The portion of carbon dioxide rich flue gas stream for use as regeneration gas is withdrawn downstream of the flue gas condenser 36, but upstream of the gas drier 70, as seen in the flow direction of the flue gas. Preferably, the portion of carbon dioxide rich flue gas stream for use as regeneration gas is withdrawn downstream of the flue gas condenser 36, but upstream of the compressor 41, as seen in the flow direction of the flue gas. In the embodiment of Fig. 2, the carbon dioxide rich flue gas stream for use as regeneration gas is withdrawn directly downstream of the flue gas condenser. The regeneration system 120 comprises a heater 124 which is adapted for heating the regeneration gas. A heating circuit 126 is connected to the heater 124 for circulating a heating medium, such as steam, in the heater 124. The heated regeneration gas leaves the heater 124 via fluidly connected duct 128. A temperature sensor 130 is arranged in the duct 128 to measure the temperature of the heated regeneration gas. A valve 132 is arranged in the heating circuit 126 for controlling the flow of heating medium to the heater 124. The temperature sensor 130 controls the valve 132 to supply a suitable amount of heating medium. For regeneration of the material of the packing 112 of the gas drier 70, the heater 124 may typically heat the regeneration gas to a temperature of about 130 °C to 315 °C. In an embodiment where a 3A or 4A molecular sieve comprising a hydrated aluminosilicate is used as the desiccant, the regeneration temperature may preferably be in the range of about 200 °C to 290 °C. Regeneration valves 134, 136 are arranged on the ducts 128 and 148 respectively. During a regeneration sequence, the valves 134, 136 are opened to allow regeneration gas to be passed through the gas drier 70.

Gas drier isolation valves 142, 144 are arranged on the ducts 68, 72 respectively. During a regeneration sequence, the valves 142, 144 are shut to isolate the gas drier 70, and heated regeneration gas is supplied to the gas drier 70 from the regeneration and heating system 120 via a duct 146 which is fluidly connected to the duct 128. The regeneration gas heats the material of the packing 112 and causes a desorption of water vapour and NOₓ. Spent regeneration gas, containing desorbed water vapour and NOₓ, leaves the gas drier 70 via a duct 148. Duct 148 forwards the spent regeneration gas to the combustion zone of boiler, where it undergoes combustion together with the fuel, supplied via the supply pipe 14, and the oxygen gas mixed with the recirculated flue gas, supplied via the duct 20.

It will be appreciated that when the valves 142, 144 are closed, no carbon dioxide rich gas may pass through the gas drier 70 via duct 68. According to one embodiment, the GPU 40 may be provided with two parallel gas driers 70, with one of those parallel gas driers 70 being in operation while the other parallel gas drier 70 undergoes regeneration. According to another embodiment, the carbon dioxide rich flue gas could be emitted to the atmosphere during the regeneration of the packing 112 of the gas drier 70.

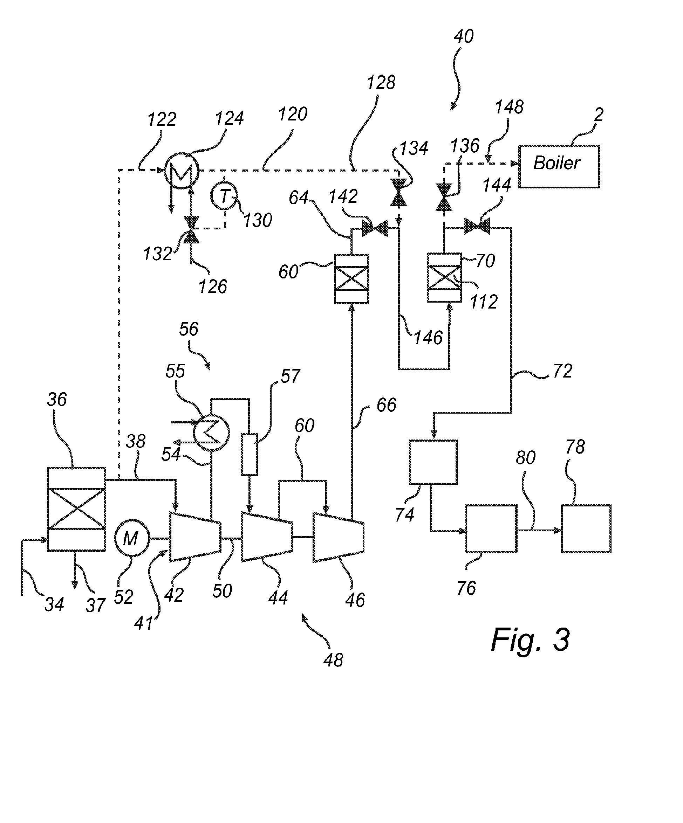

Fig. 3 illustrates an embodiment of the GPU 40 in more detail. It will be appreciated that the illustration of Fig. 3 is schematic, and that a GPU may comprise further devices for gas purification, etc.

The GPU 40 comprises at least one compressor having at least one, and typically two to ten compression stages for compressing the cleaned carbon dioxide rich flue gas. Each compression stage could be arranged as a separate unit. As an alternative, and as illustrated in Fig. 3, several compression stages could be operated by a common drive. The GPU 40 of Fig. 3 comprises a compressor 41 having a first compression stage 42, a second compression stage 44, and a third compression stage 46. The first to third compression stages 42, 44, 46 form together a low pressure compression unit 48 of the GPU 40. The compression stages 42, 44, 46 are connected to a common drive shaft 50 which is driven by a motor 52 of the compressor 41.

The low pressure compression unit 48 may comprise an intercooling unit 56, downstream of some, or all, of the compression stages 42, 44, 46. One such optional intercooling unit 56 is illustrated in the GPU 40 of Fig. 2, downstream of the first compression stage 42. The intercooling unit 56 comprises a gas cooler 55 and a gas-liquid separator 57. The gas cooler 55 cools the compressed carbon dioxide rich flue gas to a temperature which is below the dew point temperature with respect to water of the compressed carbon dioxide rich flue gas resulting in the condensation of water vapour in the flue gas. The gas-liquid separator 57 separates water droplets, generated as an effect of condensation caused by the cooling of the gas in the gas cooler 55, from the remaining gas.

The GPU 40 may comprise a mercury adsorber 60 arranged downstream of one of the compression stages 42, 44, 46. In the embodiment of Fig. 3, the mercury adsorber 60 is arranged downstream of the third compression stage 46, i.e., downstream of the low pressure compression unit 48. It will be appreciated that the mercury adsorber 60 could also have been arranged downstream of the first compression stage 42, or downstream of the second compression stage 44.

The partly cleaned carbon dioxide rich flue gas enters the GPU 40 via the duct 38 and is introduced into the first compression stage 42. A duct 54 forwards, optionally via the intercooling unit 56, the compressed gas from the first compression stage 42 to the second compression stage 44. A duct 58 forwards, optionally via a not shown intercooling unit, the compressed gas from the second compression stage 44 to the third compression stage 46. A duct 66 forwards the compressed gas from the third compression stage 46 to the mercury adsorber 60. A duct 68 forwards the compressed gas from the mercury adsorber 60 to the gas drier 70.

The mercury adsorber 60 is provided with a packing comprising a mercury adsorbent having affinity for mercury. The adsorbent may, for example, be activated carbon impregnated with sulphur, or another material that is, as such, known for its affinity for mercury. Hence, as the compressed carbon dioxide rich flue gas passes through the packing, at least a portion of the content of mercury of the gas will be adsorbed on the mercury adsorbent of the packing. The compressed carbon dioxide rich flue gas, from which at least a portion of its mercury content has been removed, is forwarded, via fluidly connected duct 68 to the gas drier 70.

When the packing has adsorbed mercury in accordance with its adsorption capacity, the spent packing is replaced with fresh packing. According to one embodiment, the GPU 40 may be provided with two parallel mercury adsorbers 60, with one of those parallel adsorbers 60 being in operation while the other parallel adsorber undergoes replacement of the packing. According to another embodiment, the carbon dioxide rich flue gas could be emitted to the atmosphere during the replacement of the packing.

The GPU 40 comprises at least one gas drier 70. The gas drier 70 serves to remove at least a portion of the remaining content of water vapour of the compressed gas. Also, at least a portion of the NOₓ content of the compressed gas may be adsorbed in the gas drier.

The compressed carbon dioxide rich flue gas from the mercury adsorber 60 enters the gas drier 70 via the fluidly connected duct 68. The gas drier 70 is provided with a packing 112 comprising a molecular sieve, having affinity for water vapour. The molecular sieve may, for example consist of aluminosilicate minerals, clays, porous glasses, microporous charcoals, zeolites, active carbons, or synthetic compounds that have open structures through which small molecules, such as water vapour can diffuse and be adsorbed, or combinations thereof. In an embodiment, the molecular sieve comprises a hydrated aluminosilicate. The molecular sieve may for example be a 3A or 4A molecular sieve. Hence, as the compressed carbon dioxide rich flue gas passes through the packing 112, at least a portion of the content of water vapour of the gas will be adsorbed on the molecular sieve of the packing 112.

In one example, the compressed carbon dioxide rich flue gas leaving the gas drier 70 via the duct 72 has a temperature of 30 °C, and an absolute pressure of just below 30 bar absolute pressure. The gas also has a reduced content of water vapour and NOₓ. Such a gas is suitable for further treatment in the CO₂ liquefaction unit 74 and the high pressure compression unit 76, and for eventually being sent to carbon dioxide sequestration 78 via duct 80, as illustrated in Fig. 2. For example, a heat exchanger, also called a cold box, of the CO₂ liquefaction unit 74 may often be made from aluminium.

The gas drier 70 is provided with a regeneration system 120 for intermittent regeneration of the water vapour adsorption capacity of the gas drier 70. A supply duct 122 is arranged for supplying a regeneration gas to the system 120. The regeneration system uses a portion of the carbon dioxide rich flue gas stream as regeneration gas. The portion of carbon dioxide rich flue gas stream for use as regeneration gas is withdrawn downstream of the flue gas condenser, but upstream of the gas drier, as seen in the flow direction of the flue gas. In the embodiment of Fig. 3, the carbon dioxide rich flue gas stream for use as regeneration gas is withdrawn directly downstream of the flue gas condenser. The regeneration system 120 comprises a heater 124 which is adapted for heating the regeneration gas. A heating circuit 126 is connected to the heater 124 for circulating a heating medium, such as steam, in the heater 124. The heated regeneration gas leaves the heater 124 via fluidly connected duct 128. A temperature sensor 130 is arranged in the duct 128 to measure the temperature of the heated regeneration gas. A valve 132 is arranged in the heating circuit 126 for controlling the flow of heating medium to the heater 124. The temperature sensor 130 controls the valve 132 to supply a suitable amount of heating medium. For regeneration of the material of the packing 112 of the gas drier 70, the heater 124 may typically heat the regeneration gas to a temperature of about 130 °C to 315 °C. In an embodiment where a 3A or 4A molecular sieve comprising a hydrated aluminosilicate is used as the desiccant, the regeneration temperature may preferably be in the range of about 200 °C to 290 °C.

Regeneration valves 134, 136 are arranged on the ducts 128 and 148 respectively. During a regeneration sequence, the valves 134, 136 are opened to allow regeneration gas to be passed through the gas drier 70.

Gas drier isolation valves 142, 144 are arranged on the ducts 68, 72 respectively. During a regeneration sequence, the valves 142, 144 are shut to isolate the gas drier 70, and heated regeneration gas is supplied to the gas drier 70 from the regeneration and heating system 120 via a duct 146 which is fluidly connected to the duct 128. The regeneration gas heats the material of the packing 112 and causes a desorption of water vapour and NOₓ. Spent regeneration gas, containing desorbed water vapour and NOₓ, leaves the gas drier 70 via a duct 148. Duct 148 forwards the spent regeneration gas to the combustion zone of boiler, where it undergoes combustion together with the fuel, supplied via the supply pipe 14, and the oxygen gas mixed with the recirculated flue gas, supplied via the duct 20.

It will be appreciated that when the valves 142, 144 are closed, no carbon dioxide rich gas may pass through the gas drier 70 via duct 68. According to one embodiment, the GPU 40 may be provided with two parallel gas driers 70, with one of those parallel gas driers 70 being in operation while the other parallel gas drier 70 undergoes regeneration. According to another embodiment, the carbon dioxide rich flue gas could be emitted to the atmosphere during the regeneration of the packing 112 of the gas drier 70.

While the invention has been described with reference to a number of preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims. Moreover, the use of the terms first, second, etc. do not denote any order or importance, but rather the terms first, second, etc. are used to distinguish one element from another.

## Claims

1. A method of cleaning a carbon dioxide rich flue gas generated in a boiler combusting a fuel in the presence of a gas containing oxygen gas, the method comprising:
removing at least a portion of the water content of the flue gas in a flue gas condenser;
compressing the carbon dioxide rich flue gas in a compressor arranged downstream of the flue gas condenser, as seen in the flow direction of the flue gas;
removing at least a portion of the remaining water content of the flue gas using molecular sieves in a gas drier arranged downstream of the compressor;
regenerating the molecular sieves by withdrawing a portion of the carbon dioxide rich flue gas downstream of the flue gas condenser, but upstream of the compressor, heating the withdrawn flue gas to a temperature suitable for regeneration of the molecular sieves, passing the heated flue gas through the gas drier to desorb water and NOₓ from the molecular sieves; and
returning the carbon dioxide rich flue gas containing the desorbed water and NOₓ to the boiler.

2. A method according to any one of the preceding claims, wherein said temperature is in the range of 130 °C to 315 °C.

3. A method according to claim 2, wherein said temperature is in the range of 200 °C to 290 °C.

4. A method according to claim any one of the preceding claims, further comprising subjecting the flue gas stream to dust removal upstream of the flue gas condenser, as seen in the flow direction of the flue gas.

5. A method according to any one of the preceding claims, further comprising subjecting the flue gas stream to sulfur dioxide removal upstream of the flue gas condenser, as seen in the flow direction of the flue gas.

6. A gas purification system for cleaning a carbon dioxide rich flue gas stream generated in a boiler (2) combusting a fuel in the presence of a gas containing oxygen gas, the gas purification system comprising:
a flue gas condenser (36) operative for removing at least a portion of the water content of the flue gas;
a compressor (41) arranged downstream of the flue gas condenser as seen in the flow direction of the carbon dioxide rich flue gas, for compressing the carbon dioxide rich flue gas;
a gas drier (70) containing molecular sieves, arranged downstream of the compressor (41) as seen in the flow direction of the carbon dioxide rich flue gas, for removing at least a portion of the remaining water content of the flue gas; and
a gas drier regeneration system (120) for desorbing water and NOₓ from the molecular sieves;
said gas drier regeneration system (120) comprising a gas conduit (122) for withdrawing a portion of the carbon dioxide rich flue gas stream downstream of the flue gas condenser (36) but upstream of the compressor (41) and directing said portion of the carbon dioxide rich flue gas stream through the gas drier (70) and back to the boiler (2), and a flue gas heater (124) operative for heating the withdrawn portion of carbon dioxide rich flue gas to a temperature suitable for regeneration of the molecular sieves before it enters the gas drier (70).

7. A flue gas treatment system according to claim 6, wherein said temperature is in the range of 130 °C to 315 °C.

8. A flue gas treatment system according to claim 7, wherein said temperature is in the range of 200 °C to 290 °C.

9. A flue gas treatment system according any one of claims 6 to 8, further comprising a dust removal filter (8) arranged upstream of the flue gas condenser (36), as seen in the flow direction of the flue gas.

10. A flue gas treatment system according to any one of claims 6 to 9, further comprising a scrubber (10) for sulfur dioxide removal upstream of the flue gas condenser (36), as seen in the flow direction of the flue gas.
